# EUROPEAN PATENT SPECIFICATION

(11) **EP 0 541 528 B1**
(45) Date of publication and mention of the grant of the patent: **04.08.1999**
(21) Application number: 90907588.9
(22) Date of filing: 18.05.1990
(51) Int. Cl.: B65H 81/00, B32B 27/32, B32B 7/02

(54) **POLYOLEFIN LAMINATE CLING FILMS**
HAFTENDE MEHRSCHICHTIGE FOLIE AUS POLYOLEFIN
FILMS ADHERENTS STRATIFIES EN POLYOLEFINE

(43) Date of publication of application: 19.05.1993
(73) Proprietor: THE DOW CHEMICAL COMPANY, Midland, Michigan 48674 (US)
(72) Inventor: HUFF, Georgia, M., Lake Jackson, TX 77566 (US); KOCH, Kaelyn, C., Lake Jackson, TX 77566 (US); MURPHY, Mark, W., Lake Jackson, TX 77566 (US); THOMAS, Christopher, J., Lake Jackson, TX 77566 (US)
(74) Representative: Smulders, Theodorus A.H.J., Ir.
(86) International application number: US9002311
(87) International publication number: WO9117944

(56) References cited:
- EP-A- 0 287 272
- US-A- 4 379 197
- US-A- 4 399 180
- US-A- 4 436 788
- US-A- 4 542 188
- US-A- 4 863 784

## Description

This invention relates generally to polyolefin laminate films having "differential cling" properties. More particularly it relates to the use of Linear Very Low Density Polyethylene Copolymers (LVLDPE) in enabling reduced amounts of "tackifier" to be used as cling promoter.

In some wrap-packaging operations polymer films are desirably used which are "self-sealing" when portions are overlapped. Many self-sealing films (sometimes called "high-cling" films) have as much cling on one side as on the other side, and this is often a detrimental feature. There are wrapping operations wherein a wrapping film is stretched tightly around an article or group of articles, and self-sealed in the stretched condition. "Cling" is conventionally measured by ASTM-4649A-3.

It has been known for many years that tackifiers can be added to a polymer to give the polymer the necessary tackiness or "cling" to adhere to itself, such as in U.S. Patent 3,025,167, but such tackifiers, such as polybutene, terpene resin, hydrogenated rosin and rosin esters, create cling on both sides unless steps are taken to provide differential cling.

Polymeric films, e.g. polyolefin films, having one-sided cling properties are disclosed in U.S. Patent 4,542,188. These involve the blending of a tackifier polymer, e.g. low molecular weight polybutene or atactic polypropylene (of less than 5000 molecular weight), with a "first" polymer and a "second" polymer, then extruding a film of the blended polymers at temperatures sufficient to maintain the blend as a liquid and cooling the extruded blend at rates sufficient to make a film having one side which has more cling than the opposite side. The patent discloses that preferably the "first" polymer is a low density polymer of ethylene, such as low density polyethylene (LDPE), and the "second" polymer is preferably a copolymer of ethylene and alpha-olefin of at least C₃. The polybutene preferably has a molecular weight of less than about 2000.

The use of high molecular weight ethylene/vinyl acetate copolymer (containing 4 to 25 percent by weight of the VA) blended with a linear copolymer of ethylene/higher alkene as a stretch wrap film is disclosed in U.S. Patent 4,425,268. The patent also discloses that cling properties can be added to the stretch wrap film by adding a low molecular weight polyisobutene, a poly-terpene, amorphous polypropylene or microcrystalline wax as a tackifier. The patent further discloses that other additives besides the tackifier may be added, such as fatty acid monoesters or an alkali metal stearate.

U.S. Patent 4,327,009 and U.S. Patent 4,415,691 disclose the high cling of films produced from LLDPE having densities "in the low range of about 0.90 to 0.93 g/cc" and high block. They disclose a method for reducing block, but retaining high cling.

EP-A 0.287.272 discloses a plastic cling film which comprises, inter alia, at least one layer which is a LLDPE polymer exhibiting cling on at least one surface which is attributed to a relatively high inherent level of n-hexane extractable material in the polymer. In marked contrast to the foregoing teachings, we have not found the level of inherent n-hexane extractables to be the correlative or determinative factor in cling properties; instead we have found density levels and density differentials to be the determinative factor (with other processing conditions remaining essentially unchanged).

Various methods have been disclosed which seek to provide differential cling properties whereby one side of a wrap film exhibits desirably strong cling properties while the other side of the film exhibits little or no cling properties. In this specification, we refer to these type of films as having "differential cling". In a general sense, prior art methods for providing films having such differential cling properties have included the use of:
(1) film laminates of at least two different polymer layers, including co-extruded films, wherein one side of the film laminate has the desired cling properties, the cling layer sometimes containing a tackifier;
(2) surface treatment (e.g., chemical, thermal, and/or electrical, such as corona discharge) of films whereby cling properties are imparted to one side of the film; and
(3) addition of tackifiers which are blended into the principle film polymer and the blend then extruded and cooled as a film in such a way as to cause the tackifiers to exhibit differential cling properties when applied as a wrap-packaging material.

It is the first method above, i.e. the addition of at least one tackifier to at least one of the polymers used in a film laminate structure, to which the present invention most closely pertains.

In this specification, the layer which comprises the outer "no-cling" layer of the laminate when applied as a packaging material is considered to be the "obverse" layer and the inner "high-cling" layer is the "reverse" layer. Ordinarily, it is the obverse layer which forms the exterior of a wrapped package or article, though there may be some instances wherein the high-cling "reverse" layer may be used as the outer layer, such as when there is some reason one would not want to use the high-cling layer in contact with the goods being wrapped. The "no cling" layer may actually exhibit a small amount of cling, according to the test procedure which is used in measuring the cling properties, but here it means that the amount of cling is insufficient to obtain a good self-seal when used in stretch-cling applications.

In this specification an "effective amount" of cling is that amount which is enough to provide the desired cling for the targeted application. It will be understood that some applications require more cling than other applications, and the present invention provides a means for regulating the amount of cling in the laminate by using pre-determined amounts of cling additives in the reverse layer, while holding the amount of cling in the obverse layer to significantly lower, acceptable levels or even to substantially no cling in the obverse layer.

A first aspect of the invention is a multiple layer film laminate which is useful as a cling-wrap packaging material, said film laminate characterized by:
an obverse layer and a reverse layer having differential cling properties and a density difference of at least 0.004 g/cc,
the obverse layer comprising a linear low density polyethylene having a density of at least 0.916 g/cc,
the reverse layer comprising a linear very low density ethylene copolymer and a tackifier, the linear very low density copolymer having a density of less than 0.915 g/cc, and
the amount of cling in the obverse layer being insufficient to obtain a good self-seal when used in stretch-cling applications.

A second aspect of the invention is a laminated film having at least two layers, said film being adapted for use as a cling-wrap packaging material wherein one of the outer layers has greater cling than the other outer layer,
characterized in that
the outer layer having the greater cling comprises LVLDPE having a density of less than 0.915 g/cc, having a MFR in the range of 0.1 to 25 g/10 min, and the density of the outer layer having the greater cling is at least 0.004 g/cc lower than the density of the other outer layer, which comprises a linear low density polyethylene having a density of at least 0.916 g/cc.

A third aspect of the invention is the use of the foregoing film laminates as a cling-wrap film.

A fourth aspect of the invention is a method for making a film laminate having differential cling properties wherein the laminate comprises at least two layers of which one is the reverse layer which serves as the cling layer, and of which one is the observe layer which serves as the layer of lesser cling, and optionally containing one or more layers between the reverse layer and the obverse layer, said method comprising
selecting as the reverse layer a LVLDPE having a density in the range of 0.915 to 0.86 g/cc and a MFR in the range of 0.1 to 25 g/10 min and which contains an amount of a tackifier sufficient to impart an effective level of cling,
selecting as the obverse layer a linear low density polyethylene having a density of not less than 0.916 g/cc and a MFR in the range of 0.1 to 25 g/10 min and optionally containing a tackifier which imparts less cling than that of the reverse layer, said linear low density polyethylene being further characterized as one having a density which is at least 0.004 g/cc greater than the density of the LVLDPE selected as the reverse layer,
optionally selecting one or more materials as layer(s) between the reverse layer and the obverse layer,
forming the selected materials into thin layers, if not already in such form,
and heat-bonding the layers to form a laminate having a thickness in the range of 0.0005 mm to 0.1524 mm.

In accordance with the present invention laminates are prepared with differential cling which are especially useful, not only in wrapping of small articles (which may or may not undergo severe handling problems), but also the wrapping (e.g. stretch-wrapping, stretch-bundling, and tension-winding) of large articles, such as crates, palleted goods, bundles, and the like. The differential cling permits the stacking or other abutting of wrapped articles without having the obverse surfaces of the articles cling to each other sufficiently to cause tearing or other damage to the wrapping when the packages are separated from each other.

Figure 1 is presented as a visual aid (not to scale) for relating the present novel laminate structures.

Figure 2 is presented as a visual aid (not to scale) for illustrating an embodiment of an obverse-to-reverse cling.

Figure 3 is presented as a visual aid (not to scale) for illustrating an embodiment of a reverse-to-reverse cling.

Figure 4 is a graph for relating certain data from Example 3 of this specification.

The amount of cling desired in the reverse layer, and the amount of no-cling desired in the obverse layer can vary over a fairly wide range, depending on the particular application as a self-sealing wrapping material. Some applications, such as large pallet wrappings, usually require a high or very high degree of cling, especially when the wrapping is stretched to high elongation. Some applications require only a modicum of cling, such as wrapping of small goods which are to be opened easily by the consumer. For purposes of description in this specification, we arbitrarily designate the following cling ranges, as measured by ASTM-4694A-3.

| | |
|---|---|
| very low cling | 0 to 50 |
| low cling | 51 to 80 |
| medium cling | 81 to 170 |
| high cling | 171 to 250 |
| very high cling | above 250 |

The LVLDPE and LLDPE copolymers are known among practitioners of the linear ethylene polymer art. They are prepared using coordination metal catalysts, such as the Ziegler, or Natta, or Phillips type and are made by interpolymerizing a majority amount of ethylene with a minor amount of at least one copolymerizable alphaalkene of C₃-C₁₂, preferably at least one of C₄-C₈, most preferably C₅-C₈. Among the alpha-olefins (also known as alpha-alkenes) such combinations as butene/octene, hexene/octene, or butene/hexene/octene may be used. Isomeric forms of the alkenes may be used as the alkene or as one of the alkenes, e.g., isobutene, isopentene, isohexene, isooctene, and the like.

It is well known in the copolymerization of ethylene with higher alpha-olefin comonomers, in producing linear copolymers of ethylene, that the greater the comonomer content along the copolymer chain, the lower the density. Also, the higher the molecular weight of the comonomer, the greater the effect on the density; e.g., a given amount of octene will lower the density more than if the same mole percentage amount of butene is used.

Except for the pendent alkyl side groups of the alpha-olefin comonomer in the copolymer chain (the side groups being that portion of the alpha-olefin which is not part of the carbon chain "backbone" itself), the chain is essentially linear, in contradistinction to the branched chains of polyethylene one obtains by polymerizing ethylene using a free-radical initiator in a high pressure reactor. In this disclosure, linear ethylene polymers made in an aliphatic solvent or aliphatic carrier are preferred over those made in a gas phase process.

When made by an interpolymerization process, the occurrence of the higher alpha-olefin groups along the polymer chain is substantially random in the true sense of a comonomer, rather than concentrated at the ends of ethylene chains which is found when ethylene is polymerized in the presence of a telogen or other chainstopper or chain-regulator. In contrast thereto, when using free-radical initiators, which uses high pressures and temperatures, attempts to copolymerize a higher alkene of C₃ or greater, especially C₄ or greater, meets with little formation of true random interpolymers because the higher alkene tends to function as a telogen and terminate the ethylene polymer chains, including side branch chains, rather than being randomly disposed along the chains.

The LVLDPE is preferably made using octene as the alpha-olefin comonomer, with enough of the octene being employed to bring the density of the copolymer into the critical range of 0.915 to 0.86 g/cc. Preferably the melt flow rate (MFR) as measured by ASTM D-1238 (190/2.16) is in the range of 0.1 to 25 g/10 min., more preferably 0.5 to 15 g/10 min., most preferably 0.7 to 10 g/10 min. Other alpha-olefin comonomers used in amounts which produce interpolymers in the above density range and MFR range are operable, though are generally less preferred. The LVLDPE reverse layer preferably has a density of 0.912 g/cc or lower.

In this disclosure, any polymer having a MFR of not more than about 25 g/10 min., when measured by ASTM D-1238 (190/2.16) is considered to be a high molecular weight polymer, though obviously the lower the MFR value of a given copolymer composition, the higher is the molecular weight of the polymer.

The LLDPE used as the obverse layer is preferably made using octene as the alpha-olefin comonomer, with enough of the alpha-olefin being employed to bring the density of the copolymer into the range of 0.916 g/cc and up to 0.95 g/cc. Preferably the melt flow rate (MFR) as measured by ASTM D-1238 (190/2.16) is in the range of 0.1 to 25 g/10 min., more preferably 0.5 to 10 g/10 min., most preferably 0.7 to 5 g/10 min. Other ethylene polymers or ethylene copolymers having the above density ranges and MFR ranges can be used, but are generally not as preferred as the LLDPE. The density of the polymer used as the obverse layer preferably has a density of greater than 0.917 g/cc.

In processes in which the linear polymers are made, with resulting product properties largely dependent on the process conditions, presence of contaminants, and type of coordination metal catalyst employed, significant amounts of low molecular weight fractions are sometimes formed. These low molecular weight fractions are often referred to as "n-hexane extractables". Some polymers are manufactured which contain ingredients which are used to impart various properties to the polymer, such as processability, stress crack resistance, altered slip properties, altered block properties, antioxidants, compatibilizers, etc. Such ingredients may be "n-hexane extractable" and some may have an effect on the cling property of the polymer, either by increasing it or decreasing it.

The laminate structure of this invention comprises at least one layer of LVLDPE having a critical density of 0.915 g/cc or less as the reverse layer and at least one layer of LLDPE having a critical density of at least 0.916 g/cc as the obverse layer; furthermore, it is critical that the difference between the density of the reverse layer and the density of the obverse layer is at least 0.004 g/cc. The laminate may be prepared by co-extrusion (blown or cast) of the layers, whereby the layers become melt-bonded, or a molten layer of one can be extruded onto a frozen layer of the other, thereby effecting a bond between them; or a frozen layer of one and a frozen layer of the other can be pressed together by rollers and heated to effect a bond between them. Furthermore, layers of other materials can be sandwiched in the laminate as layers between the LVLDPE reverse layer and the obverse layer, whether the obverse layer is LLDPE or another ethylene polymer or ethylene copolymer. It is within the purview of the present invention that the laminate can comprise, for example, layers of LVLDPE/LLDPE/other ethylene polymer, LVLDPE/other ethylene polymer/LLDPE, or LVLDPE/other olefin polymer/LLDPE, where the other olefin polymer can be a C₃-C₈ alpha-olefin. Other combinations of layers can be used without departing from the present invention of using a laminate comprising a reverse layer having a density of 0.915 g/cc or less and an obverse layer having a density of at least 0.916 g/cc, and a density difference of at least 0.004 g/cc (preferably 0.005 g/cc or more).

The tackifier which one may use in providing beneficial cling properties to the laminate structure may be at least one of the low molecular weight C₃-C₆ polyolefins, such as polypropylene, polybutene, polyisobutene, polyhexene, preferably polybutene or polyisobutene, or mixtures of these. It may also be a low molecular weight copolymer of the C₂-C₆ olefins, such as ethylene/methacrylic acid copolymers, ethylene/acrylic acid copolymers, ethylene/vinyl alkylate copolymers, ethylene/alkyl acrylate copolymers, and the like, so long as they are used in amounts which are either compatible with the PE, or can be compatibilized by way of a compatibilizing agent and which impart a beneficial amount of the cling properties desired. By the expression "low molecular weight" it is meant that the molecules of the tackifier are sufficiently small to be able to manifest themselves on the surface of the laminate structure whereby the desired cling properties are achieved. These "low molecular weight" polymers have a MFR which is much too high to be measured by the "standard" ASTM D-1238 test conditions of 190°C/2.16 kg and usually have to be measured at either much lower temperatures or much smaller weights, or both, such as 125°C/0.325 kg or lower. One manner in which the tackifier may manifest cling properties on the surface of the polymer is by migration to the surface of the polymer (containing the tackifier dispersed therein) as the polymer is cooled after being melt-blown, melt-cast, or otherwise formed into a film. It is possible in some cases for the tackifier to migrate to the surface of the polymer film for an appreciable period of time after the film has been cooled and stored.

It has also been found that tackifier added to the LVLDPE portion of a LVLDPE/LLDPE laminate structure can "bleed" to some extent into the higher density LLDPE and impart a limited amount of cling to the obverse surface of the LLDPE layer. Thus, the LLDPE layer of the laminate can contain some tackifier by that means, or by having it added, as well as having some inherent amount of cling, as slight as it may be, by way of having low molecular weight fractions, such as those which are subject to n-hexane extraction. The same "bleeding" from the LVLDPE layer into the obverse layer can occur with many other olefin polymers or copolymers. Having a modicum of cling on the obverse surface is often beneficial when it is desired to have the reverse surface cling to the obverse surface; yet by having only limited cling properties in the obverse surface, many handling and storage procedures are made easier.

In general, it is preferred that the reverse layer contain less than 6 percent by weight of tackifier; and more preferably less than 3 percent by weight; and most preferably in amount in a range of 0.01 to 3 percent by weight.

The test method for determining n-hexane extractables is one recommended by the FDA for determining suitability of the polymer for use in contact with ingestable products. The recommended FDA test method is published as CFR 177.1520(c).

The method of dispersing the tackifier in the linear copolymer may be by any convenient method which provides substantially uniform dispersions. One method is to physically mix the tackifier with solid particles of the linear copolymer in a tumbling device, or other suitable device, then put the mixture through a mixer-extruder at temperatures sufficient to at least soften the copolymer, if not to melt it; this is a convenient method for making a masterbatch (concentrate) for subsequent mixing into polymers at desired levels. High-shear mixers sometimes create enough shear-heat to substantially soften or melt the polymer. Also, if the tackifier is a liquid, or becomes liquified when heated during the mixing operation, it may be injected into the polymer in a mixing device (e.g., an extruder), or in some cases, it may have a tendency to behave somewhat like a solvent and actually cause the polymer to soften at a lower temperature than it normally would; in this way the tackifier can assist itself in becoming uniformly dispersed in the polymer.

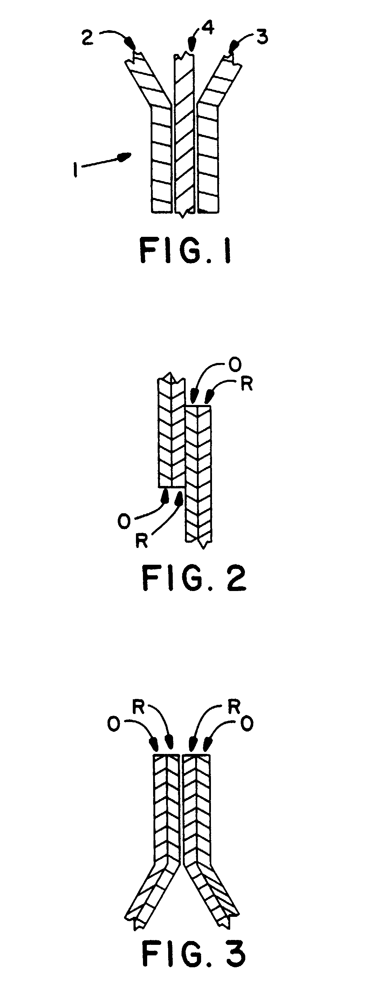

Figure 1 provides an illustration, not drawn to any scale, of a cross-sectional view of a portion of an embodiment as a visual aid for relating the invention. There the generally-depicted laminate structure (1) comprises the LVLDPE reverse layer (2) which is shown partially peeled-back for ease of description, the obverse layer (3) which is also shown partially peeled-back for the same purpose, and an optional layer (4) between the LVLDPE and obverse layers which may be used at times to impart certain properties such as color, opaqueness, vapor-impermeability, aesthetics, RF-sealability, static dissipation, UV light blockage, film-building, or for other reasons. The optional layers may be, for example, another layer of ethylene polymer, a vinyl polymer layer, an acrylic polymer layer, a thin paper layer, a thin metal foil or mesh, a thin fabric, an RF-responsive ethylene/carbon monoxide copolymer or terpolymer. By the word "thin", as used supra, it is meant that the optional layer is not so thick that it prevents easy folding and/or overlapping of the present laminate in order to utilize the self-sealing properties of the laminate. Ordinarily, the total thickness of the laminate is in the range of 0.02 mils (0.00051mm) to 6 mils (0.1524 mm), depending on the particular application. When used as a stretchcling film, it is not unusual for a film to be stretched, at least in part, to less than one-half its original thickness. In some of the applications where only small items are to be wrapped, such as is done in some households, there may be little or no stretching involved and often only a modicum of cling is needed for such applications; here a very thin film laminate can be used, such as films of 0.2 mils or less. In the absence of the optional layer (4) the two-layer lami-nate is, nevertheless, widely useful as a laminate having differential cling properties.

Figure 2 is an illustration, not to scale, for use as a visual aid in relating cling in an overlap of the obverse layer (O) with the reverse layer (R).

Figure 3 is an illustration, not to scale, for use as a visul aid in relating cling in an embodiment wherein the reverse layer (R) of a film portion clings to the reverse layer (R) of another portion of film, with (O) representing the obverse layer.

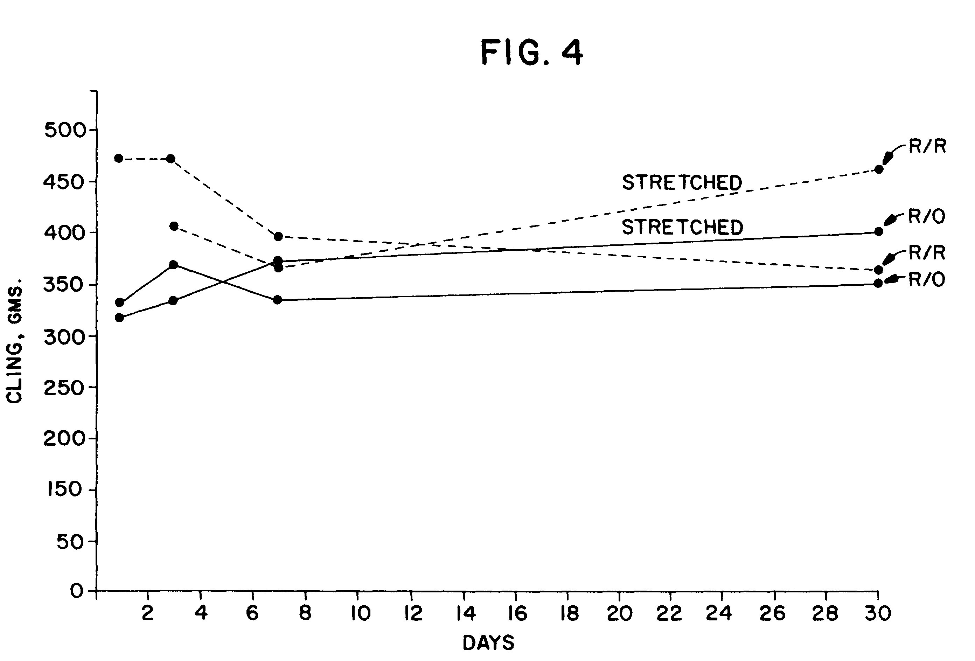

Figure 4 is a graph using data selected from Example 3.

The following examples are provided to demonstrate cling properties of films which can be used in some of the embodiments of the present invention, and to provide some examples for comparison purposes, but the invention is not limited to laminates containing these particular embodiments. In the following examples, melt flow rate (MFR) is measured in accordance with ASTM D-1238 (190°C/2.16kg) unless noted otherwise.

### Example 1. (Comparison tests using monolayer films)

Blown monolayer films are fabricated on a 2" (50.8 mm) extruder under typical conditions. The films are varied as to density of the base PE and the polybutene tackifier by molecular weight and concentration. The films are tested for cling according to ASTM-4649A-3 at various time intervals. The cling recorded in Table 1 is that measured after equilibrium is reached. In some cases the cling of the PE polymer, with and/or without the cling additive, is measured to compare the cling of one exposed surface of the simulated laminate with the other exposed surface of the simulated laminate and in other cases to compare the cling of the surface to itself.

In the following Table 1:
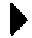 PE-1 is LVLDPE, 1-octene comonomer, density 0.912 g/cc, MFR of 1 g/10 min.
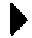 PE-2 is LLDPE, 1-octene comonomer, density 0.920 g/cc, MFR of 1 g/10 min.
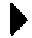 PE-3 is LLDPE, 1-octene comonomer, density of 0.926 g/cc, MFR of 1 g/10 min.
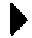 In Table 1 "300" means 1.5% of PB-300 is added to the polymer. PB-300 is a commercially-available polybutene having a nominal molecular weight of about 1350.
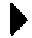 In Table 1 "1500" means 1.5% of PB-1500 is added to the polymer. PB-1500 is a commercially-available polybutene having a nominal molecular weight of about 2100.

**TABLE 1**

| Simulated Laminate Structures | | | | |
|---|---|---|---|---|
| Laminate Structure | | Cling, in Grams | | |
| Reverse Layer | Obverse Layer | Reverse to Obverse | Reverse to Reverse | Obverse to Obverse |
| PE-1/300 | PE-2 | 117 | 225 | 5 |
| Ditto | PE-3 | 120 | 225 | 5 |
| Ditto | PE-2/300 | 165 | 225 | 30 |
| Ditto | PE-3/300 | 163 | 225 | 50 |
| Ditto | PE-3/1500 | 120 | 225 | 5 |
| | | | | |
| PE-1/1500 | PE-2 | 115 | 265 | 5 |
| Ditto | PE-3 | 100 | 265 | 5 |
| Ditto | PE-2/300 | 175 | 265 | 30 |
| Ditto | PE-3/300 | 200 | 265 | 50 |

### Example 2.

A factorial designed experiment is developed to examine the relationships between percentage of low molecular weight polybutene (2100 molecular weight) and LVLDPE (1-octene comonomer). See Table 2A below.

**TABLE 2A**

| Designed Experiment For One-sided Cling | | | | | | |
|---|---|---|---|---|---|---|
| | | | | | MFR g/10 min | |
| Sample | %PB-A | %PB-B | LVLDPE Density-A | LLDPE Density-B | A | B |
| 1 | 1.5 | 0 | 0. 05 | 0.917 | 4.5 | 2.3 |
| 2 | 1.5 | 1.5 | 0.912 | 0.926 | 3.3 | 2.0 |
| 3 | 1.5 | 0 | 0.912 | 0.926 | 3.3 | 2.0 |
| 4 | 1.5 | 1.5 | 0.905 | 0.926 | 4.5 | 2.0 |
| 5 | 1.5 | 0 | 0.912 | 0.917 | 3.3 | 2.3 |

Two-layer cast coextruded structures comprising Layer A (LVLDPE), containing 1.5 or 4 percent PB, and Layer B (LLDPE), containing 0 or 1.5 percent PB, are tested for cling according to ASTM-4649A-3 at one day, three day, seven day, and one month time intervals. The samples on which the best results are achieved are shown in Table 2A above, with the cling measurements shown in Table 2B below.

**TABLE 2B**

| | Grams of Cling After | | | | Stretch |
|---|---|---|---|---|---|
| | 1 Day | 3 Days | 7 Days | 31 Days | 200%* |
| Sample 1. | | | | | |
| Cling/no cling | 223 | 295 | 322 | 352 | 285 |
| No cling/no cling | 75 | 112 | 142 | 115 | 65 |

| Sample 2. | | | | | |
|---|---|---|---|---|---|
| Cling/no cling | 215 | 228 | 265 | 395 | 230 |
| No cling/no cling | 55 | 58 | 58 | 60 | 73 |

| Sample 3. | | | | | |
|---|---|---|---|---|---|
| Cling/no cling | 175 | 203 | 233 | 313 | 213 |
| No cling/no cling | 53 | 60 | 73 | 98 | 77 |

| Sample 4. | | | | | |
|---|---|---|---|---|---|
| Cling/no cling | 328 | 338 | 348 | 357 | 345 |
| No cling/no cling | 42 | 52 | 73 | 208 | 78 |

| Sample 5. | | | | | |
|---|---|---|---|---|---|
| Cling/no cling | 193 | 258 | 280 | 227 | 167 |
| No cling/no cling | 58 | 73 | 107 | 78 | 65 |
| | | | | | |

| | | | | | |
|---|---|---|---|---|---|
| (*After the 31 day test, film was stretched 200% and cling re-measured) | | | | | |

### Example 3.

A cast coextruded structure (2-mil film) consisting of 25 percent by weight of LLDPE (2.5 MFR, 0.935 dens.) as the obverse (no cling) layer and 75 percent by weight of LVLDPE (4 MFR, 0.904 dens.) containing 1.5 percent PB-300 (1350 molecular weight) as the reverse (cling) layer is fabricated under standard conditions. Cling is measured after 1, 3, 7, and 30 days. There is no measurable cling (and low coefficients of friction) between obverse-to-obverse surfaces, but there are very high levels of cling (above 300 g) between reverse-to-reverse and reverse-to-obverse surfaces (both stretched and unstretched). The cling data in Table 3 below are graphed in Figure 4 where the cling/no cling (reverse-to-obverse, R/O) measurements are represented by the solid line and the cling/cling (reverse-to-reverse, R/R) measurements are represented by the dotted line.

**Table 3**

| | Cling, in Grams | | | | Coef.of Friction |
|---|---|---|---|---|---|
| Days | Reverse/unstrch | Obverse /strchd | Reverse/unstrch | Reverse/strchd | Obverse/Obverse |
| 1 | 332 | 317 | 472 | --- | 0.4 |
| 3 | 367 | 332 | 472 | 412 | 0.4 |
| 7 | 335 | 373 | 398 | 370 | 0.4 |
| 30 | 352 | 403 | 362 | 467 | 0.45 |

### Example 4.

A cast coextruded laminate is prepared using LVLDPE (density 0.905 g/cc and MFR of 4) having a sufficiently low density to impart at least a modicum of cling, as the reverse layer, and using LLDPE (density 0.935 g/cc and MFR of 25) having virtually no cling as the obverse layer. The laminate is about 2 mils thick, of which the weight ratio of the reverse layer to the obverse layer is about 75/25. The following cling measurements are obtained: reverse to reverse:174; obverse to obverse: 0; reverse to obverse:122.

The laminate is useful in wrapping packages which are intended to be easily opened by the consumer, yet exhibits little or no tendency to cling to other abutting packages, such as when stacked next to each other or one on top of another.

### Example 5

Four 2-layer laminated structures are prepared by cast coextruding a tackified reverse layer to a non-tackified obverse layer. The tackifier is a low molecular weight polybutene (PB) (2100 molecular weight), the reverse layer is a LVLDPE, and obverse layer is a LLDPE. The weight ratio of reverse/obverse layers is 75/25. The tackifier is then allowed to diffuse throughout the structure until equilibrium is essentially reached at ambient laboratory conditions. The samples are as outlined below in Table 5A and the 7-day cling data are in Table 5B.

**Table 5A**

| Laminate Layers | | | |
|---|---|---|---|
| Sample | Reverse, Dens. | Reverse, %PB | Obverse, Dens. |
| 1 | 0.905 | 0.5 | 0.935 |
| 2 | 0.905 | 1.0 | 0.935 |
| 3 | 0.912 | 0.5 | 0.935 |
| 4 | 0.912 | 1.0 | 0.935 |

**Table 5B**

| Cling, in Grams as Measured by ASTM D-4649A-3 | | | | |
|---|---|---|---|---|
| Sample | Rev./Obv. | Rev./Obv.200% | Stretched | Obv/Obv. |
| 1 | 137 | 108 | | 0 |
| 2 | 203 | 128 | | 0 |
| 3 | 113 | 72 | | 0 |
| 4 | 152 | 87 | | 0 |

### Example 6

A bundle of 50 1b, bags of resin pellets is stretch-wrapped using a 0.8 mil blown film laminate having a cling layer of LVLDPE (1 MFR, 0.905 dens.), containing a small amount of low molecular weight polybutene as a tackifier, and a no-cling layer of LLDPE (1 MFR, 0.935 dens.). The wrapping process uses the no-cling layer as the outside surface of the bundle, and the cling layer is overlapped and brought into good contact with the no-cling layer. The stretch-wrapped bundle is found to have sufficient seal strength (cling) to survive being transported on a fork-lift pallet and then on an open-bed truck without failure of the wrapping.

## Claims

1. A multiple layer film laminate which is useful as a cling-wrap packaging material, said film laminate characterized by:
an obverse layer and a reverse layer having differential cling properties and a density difference of at least 0.004 g/cc,
the obverse layer comprising a linear low density polyethylene having a density of at least 0.916 g/cc,
the reverse layer comprising a linear very low density ethylene copolymer and a tackifier, the linear very low density copolymer having a density of less than 0.915 g/cc, and
the amount of cling in the obverse layer being insufficient to obtain a good self-seal when used in stretch-cling applications.

2. The laminate of claim 1 wherein the linear very low density polyethylene has a MFR in the range of 0.1 g/10 min to 25 g/10 min, and the obverse layer has a MFR in the range of 0.1 g/10 min to 25 g/10 min, and wherein the reverse layer contains less than 6 percent by weight of tackifier.

3. The laminate of claim 1 wherein the linear very low density polyethylene comprises ethylene interpolymerized with at least one alpha-olefin of the group consisting of octene, hexene, butene, and 4-methylpentene.

4. The laminate of claim 1 wherein the linear very low density polyethylene comprises ethylene interpolymerized with octene.

5. The laminate of claim 1 wherein the linear very low density polyethylene comprises ethylene interpolymerized with octene and at least one of hexene and butene.

6. The laminate of claim 1 wherein the linear very low density polyethylene has blended therein a minor amount of at least one other high molecular weight polyolefin.

7. The laminate of claim 1 wherein the linear low density polyethylene comprising obverse layer comprises an interpolymer of ethylene and at least one C₃-C₁₂ alpha-olefin.

8. The laminate of claim 1 wherein the linear low density polyethylene comprising obverse layer comprises an interpolymer of ethylene and octene.

9. The laminate of claim 1 wherein the reverse layer has a density of 0.912 g/cc or less.

10. The laminate of claim 1 wherein the obverse layer has a density of 0.917 g/cc or more.

11. The laminate of claim 1 wherein the reverse linear very low density polyethylene layer and the obverse layer each comprise an ethylene/l-octene/alpha-olefin terpolymer wherein the alpha-olefin is a C₃-C₆.

12. The laminate of claim wherein the tackifier comprises a low molecular weight polymer as an additive.

13. The laminate of claim 1 wherein the tackifier comprises n-hexane extractable, low molecular weight polymeric material.

14. The laminate of claim 1 wherein the tackifier comprises a low molecular weight C₂-C₁₂ polyolefin as an additive in amounts which provide effective cling.

15. The laminate of claim 1 wherein the tackifier comprises at least one of the low molecular weight C₃-C₆ polyolefins of the group consisting of polypropylene, polybutene, polypentene, polyhexene, isomers of these, and mixtures of these.

16. The laminate of claim 1 wherein the tackifier is present in the linear very low density polyethylene in an amount in the range of from 0.01 percent to 3 percent by weight.

17. The laminate of claim 1 wherein the tackifier is low molecular weight polybutene or polyisobutene.

18. The laminate of claim 1 wherein the obverse layer and reverse layers are the outside layers of a laminate comprising at least 3 layers.

19. The laminate of claim 1 wherein the thickness of the laminate is in the range of 0.02 to 6 mils.

20. A laminated film having at least two layers, said film being adapted for use as a cling-wrap packaging material wherein one of the outer layers has greater cling than the other outer layer, characterized in that the outer layer having a greater cling comprises linear very low density polyethylene having a density of less than 0.915 g/cc, having a MFR in the range of 0.1 to 25 g/10 min, and the density of the outer layer having the greater cling is at least 0.004 g/cc lower than the density of the other outer layer, which comprises a linear low density polyethylene having a density of at least 0.916 g/cc.

21. Use of the film laminate of any of the preceding claims as a cling-wrap film.

22. A method for making a film laminate having differential cling properties wherein the laminate comprises at least two layers of which one is the reverse layer which serves as the cling layer, and of which one is the obverse layer which serves as the layer of lesser cling, and optionally containing one or more layers between the reverse layer and the obverse layer, said method characterized by:
selecting as the reverse layer a linear very low density polyethylene having a density in the range of 0.915 to 0.86 g/cc and a MFR in the range of 0.1 to 25 g/10 min and which contains an amount of a tackifier sufficient to impart an effective level of cling,
selecting as the obverse layer a linear low density polyethylene having a density of not less than 0.916 g/cc and a MFR in the range of 0.1 to 25 g/10 min and optionally containing a tackifier which imparts less cling than that of the reverse layer, said linear low density polyethylene being further characterized as one having a density which is at least 0.004 g/cc greater than the density of he linear very low density polyethylene selected as the reverse layer,
optionally selecting one or more materials as layer(s) between the reverse layer and the obverse layer,
forming the selected materials into thin layers, if not already in such form,
and heat-bonding the layers to form a laminate having a thickness in the range of 0.0005 mm to 0.1524 mm.

23. The film laminate defined by claim 1 wherein the linear low density polyethylene is an interpolymer of ethylene and butene-1, hexene-1, octene-1 and/or 4-methyl-1-pentene.

24. The film laminate defined by claim 1 wherein the tackifier is a low molecular weight polyolefin.

25. The film laminate defined by claim 1 additionally comprising at least one film layer as a core layer.

26. The use of the film laminate defined by claim 1 as a cling-wrap packaging material.

27. A cling-wrapped package comprising an article cling-wrapped in the film laminate defined by claim 1.

28. A multiple layer film laminate which is useful as a cling-wrap packaging material, said film laminate characterized by:
an obverse layer and a reverse layer having differential cling properties and a density difference of at least 0.004 g/cc,
the obverse layer comprising a linear low density polyethylene having a density of at least 0.916 g/cc,
the reverse layer comprising a linear very low density ethylene copolymer and a low molecular weight polybutene or polyisobutene tackifier, the linear very low density copolymer having a density of less than 0.915 g/cc, and
the amount of cling in the obverse layer being insufficient to obtain a good self-seal when used in stretch-cling applications.

## Patentansprüche

1. Mehrschicht-Folienlaminat, das als Haft-Wickel-Verpackungsmaterial verwendbar ist, wobei das Folienlaminat gekennzeichnet ist durch eine vorderseitige Schicht und eine rückseitige Schicht mit differentiellen Hafteigenschaften und einem Dichteunterschied von mindestens 0,004 g/cm³, wobei die vorderseitige Schicht ein lineares Polyethylen geringer Dichte mit einer Dichte von mindestens 0,916 g/cm³ umfaßt, die rückseitige Schicht ein lineares Ethylenkopolymer sehr geringer Dichte und einen Klebrigmacher umfaßt, wobei das lineare Kopolymer sehr geringer Dichte eine Dichte von weniger als 0,915 g/cm³ umfaßt, und der Grad an Haftvermögen in der vorderseitigen Schicht ungenügend ist, um eine gute Selbstabdichtung in Dehn-Haft-Anwendungen zu erhalten.

2. Laminat nach Anspruch 1, wobei das lineare Polyethylen sehr geringer Dichte eine MFR im Bereich von 0,1 g/10 min bis 25 g/10 min, und die vorderseitige Schicht eine MFR im Bereich von 0,1 g/ 10 min bis 25 g/10 min aufweist, und worin die rückseitige Schicht weniger als 6 Gewichtsprozent Klebrigmacher enthält.

3. Laminat nach Anspruch 1, worin das lineare Polyethylen sehr geringer Dichte Ethylen umfaßt, das mit mindestens einem alpha-Olefin aus der Gruppe bestehend aus Octen, Hexen, Buten und 4-Methylpenten interpolymerisiert ist.

4. Laminat nach Anspruch 1, worin das lineare Polyethylen sehr geringer Dichte Ethylen, das mit Octen interpolymerisiert ist, umfaßt.

5. Laminat nach Anspruch 1, worin das lineare Polyethylen sehr geringer Dichte Ethylen, das mit Octen und mit mindestens einem von Hexen und Buten interpolymerisiert ist.

6. Laminat nach Anspruch 1, worin in das lineare Polyethylen sehr geringer Dichte ein kleinerer Anteil mindestens eines anderen Polyolefins hohen Molekulargewichts beigemischt ist.

7. Laminat nach Anspruch 1, worin die lineares Polyethylen geringer Dichte umfassende vorderseitige Schicht ein Interpolymer von Ethylen und mindestens einem C₃-C₁₂-alpha-Olefin umfaßt.

8. Laminat nach Anspruch 1, worin die lineares Polyethylen geringer Dichte umfassende vorderseitige Schicht ein Interpolymer von Ethylen und Octen umfaßt.

9. Laminat nach Anspruch 1, worin die rückseitige Schicht eine Dichte von 0,912 g/cm³ oder weniger aufweist.

10. Laminat nach Anspruch 1, worin die vorderseitige Schicht eine Dichte von 0,917 g/cm³ oder mehr aufweist.

11. Laminat nach Anspruch 1, worin die rückseitige lineare Polyethylenschicht sehr geringer Dichte und die vorderseitige Schicht jede für sich ein Ethylen/1-Octen/alpha-Olefin Terpolymer umfassen, worin das alpha-Olefin ein C₃-C₆ ist.

12. Laminat nach Anspruch 1, worin der Klebrigmacher ein niedrigmolekulares Polymer als Zusatzstoff umfaßt.

13. Laminat nach Anspruch 1, worin der Klebrigmacher n-Hexan extrahierbares, niedrigmolekulares polymeres Material umfaßt.

14. Laminat nach Anspruch 1, worin der Klebrigmacher ein niedrigmolekulares C₂-C₁₂-Polyolefin als Zusatzstoff in Mengen, die ein wirksames Haftvermögen bewirken, umfaßt.

15. Laminat nach Anspruch 1, worin der Klebrigmacher mindestens eines der niedrigmolekularen C₃-C₆-Polyolefine aus der Gruppe bestehend aus Polypropylen, Polybuten, Polypenten, Polyhexen, deren Isomeren und Gemischen umfasst.

16. Laminat nach Anspruch 1, worin der Klebrigmacher in dem linearen Polyethylen sehr geringer Dichte in einer Menge im Bereich von 0,01 bis 3 Gewichtsprozent vorliegt.

17. Laminat nach Anspruch 1, worin der Klebrigmacher niedrigmolekulares Polybuten oder Polyisobuten ist.

18. Laminat nach Anspruch 1, worin die vorderseitige Schicht und die rückseitige Schichten die äußeren Schichten eines Laminats enthaltend mindestens 3 Schichten.

19. Laminat nach Anspruch 1, worin die Dicke des Laminats im Bereich von 0,02 bis 6 mils liegt.

20. Folienlaminat mit mindestens zwei Schichten, das als Haft-Wickel Verpackunsmaterial eingesetzt wird, worin eine der äußeren Schichten ein größeres Haftvermögen als die andere äußere Schicht aufweist, dadurch gekennzeichnet, daß die äußere Schicht mit einem höheren Haftvermögen lineares Polyethylen geringer Dichte, mit einer Dichte von weniger als 0,915 g/cm³, mit einer MFR im Bereich von 0,1 bis 25 g/10 min umfaßt, und die Dichte der äußeren Schicht mit dem höheren Haftvermögen mindestens 0,004 g/cm³ niedriger ist als die Dichte der anderen äußeren Schicht, die lineares Polyethylen geringer Dichte mit einer Dichte von mindestens 0,916 g/cm³ umfaßt.

21. Verwendung des Folienlaminats von einem der vorhergehenden Ansprüche als eine Haft-Wickel-Folie.

22. Verfahren zur Herstellung eines Folienlaminats mit differentiellen
Hafteigenschaften, worin das Laminat mindestens zwei Schichten umfaßt, von denen eine die rückseitige Schicht ist, die als die Haftschicht dient, und von denen eine die vorderseitige Schicht ist, die als die Schicht mit dem geringeren Haftvermögen dient, und die gegebenenfalls eine oder mehrere Schichten zwischen der rückseitigen Schicht und der vorderseitigen Schicht enthält, wobei das Verfahren gekennzeichnet ist durch
Auswählen eines linearen Polyethylen mit sehr geringer Dichte, mit einer Dichte im Bereich von 0,915 bis 0,86 g/cm³ und einer MFR im Bereich von 0,1 bis 25 g/10 min als rückseitige Schicht, die eine Menge an Klebrigmacher enthält, die ausreicht, um einen wirksamen Grad an Haftvermögen zu verleihen,
Auswählen eines linearen Polyethylen geringer Dichte, mit einer Dichte von nicht weniger als 0,916 g/cm³ und einer MFR im Bereich von 0,1 bis 25 g/10 min als vorderseitige Schicht, die gegebenenfalls einen Klebrigmacher enthält, der weniger Haftvermögen aufweist als der der rückseitigen Schicht, wobei das lineare Polyethylen geringer Dichte weiterhin dadurch gekennzeichnet ist, daß es eine Dichte hat, die mindestens 0,004 g/cm³ größer ist als die Dichte des linearen Polyethylens sehr geringer Dichte, das als rückseitige Schicht ausgewählt wird, gegebenenfalls Auswählen eines oder mehrerer Materialien als Schicht(en) zwischen der rückseitigen Schicht und der vorderseitigen Schicht, Formen der ausgewählten Materialien zu dünnen Schichten, falls sie nicht schon in dieser Form vorliegen, und Heißverbinden der Schichten um ein Laminat mit einer Dicke im Bereich von 0,0005 mm bis 0,1524 mm zu bilden.

23. Folienlaminat nach Anspruch 1, worin das lineare Polyethylen geringer Dichte ein Interpolymer von Ethylen und Buten-1, Hexen-1, Octen-1 und/oder 4-Methyl-1-Penten ist.

24. Folienlaminat nach Anspruch 1, worin der Klebrigmacher ein Polyolefin geringen Molekulargewichts ist.

25. Folienlaminat nach Anspruch 1 zusätzlich umfassend mindestens eine Folienschicht als Kernschicht.

26. Verwendung des Folienlaminat nach Anspruch 1 als ein Haft-Wickel-Verpackungsmaterial.

27. Haft-Wickel-Verpackung umfassend einen Gegenstand, der in dem Folienlaminat nach Anspruch 1 Haft-umwickelt ist.

28. Mehrschicht-Folienlaminat, verwendbar als ein Haft-Wickel-Verpackungsmaterial, wobei das Folienlaminat gekennzeichnet ist durch eine vorderseitige Schicht und eine rückseitige Schicht mit differentiellen Hafteigenschaften und einem Dichteunterschied von mindestens 0,004 g/cm³, wobei die vorderseitige Schicht ein lineares Polyethylen geringer Dichte mit einer Dichte von mindestens 0,916 g/cm³ umfaßt, die rückseitige Schicht ein lineares Ethylenkopolymer sehr geringer Dichte und einen Klebrigmacher aus Polybuten oder Polyisobuten niedrigen Molekulargewichts umfaßt, wobei das lineare Kopolymer sehr geringer Dichte eine Dichte von weniger als 0,915 g/cm³ hat, und der Grad an Haftvermögen in der vorderseitigen Schicht ungenügend ist, um eine gute Selbstabdichtung in Dehn-Haft-Anwendungen zu erreichen.

## Revendications

1. Film stratifié à plusieurs couches qui est utilisable comme matériau d'emballage adhérent, ledit film stratifié étant caractérisé par :
une couche endroit et une couche envers ayant des propriétés d'adhérence différentielles et une différence de masse volumique d'au moins 0,004 g/cm³,
la couche endroit comprenant un polyéthylène linéaire basse densité ayant une masse volumique d'au moins 0,916 g/cm³,
la couche envers comprenant un copolymère d'éthylène linéaire très basse densité et un agent collant, le copolymère linéaire très basse densité ayant une masse volumique inférieure à 0,915 g/cm³, et
le degré d'adhérence de la couche endroit étant insuffisant pour conférer une bonne auto-adhérence lorsqu'il est utilisé dans des applications d'étirement-adhérence.

2. Film stratifié selon la revendication 1, dans lequel le polyéthylène linéaire très basse densité a un indice de fluidité compris entre 0,1 g/10 min et 25 g/ 10 min, et la couche endroit a un indice de fluidité compris entre 0,1 g/10 min et 25 g/10 min, et dans lequel la couche envers contient moins de 6 % en poids d'agent collant.

3. Film stratifié selon la revendication 1, dans lequel le polyéthylène linéaire très basse densité comprend de l'éthylène interpolymérisé avec au moins une alpha-oléfine du groupe constitué par l'octène, l'hexène, le butène et le 4-méthylpentène.

4. Film stratifié selon la revendication 1, dans lequel le polyéthylène linéaire très basse densité comprend de l'éthylène interpolymérisé avec de l'octène.

5. Film stratifié selon la revendication 1, dans lequel le polyéthylène linéaire très basse densité comprend de l'éthylène interpolymérisé avec de l'octène et au moins un composé choisi parmi l'hexène et le butène.

6. Film stratifié selon la revendication 1, dans lequel le polyéthylène linéaire très basse densité est mélangé avec une quantité mineure d'au moins une autre polyoléfine de masse moléculaire élevée.

7. Film stratifié selon la revendication 1, dans lequel le polyéthylène linéaire basse densité constituant la couche endroit comprend un interpolymère d'éthylène et d'au moins une α-oléfine en C₃-C₁₂.

8. Film stratifié selon la revendication 1, dans lequel le polyéthylène linéaire basse densité constituant la couche endroit comprend un interpolymère d'éthylène et d'octène.

9. Film stratifié selon la revendication 1, dans lequel la couche envers a une masse volumique de 0,912 g/cm³ ou moins.

10. Film stratifié selon la revendication 1, dans lequel la couche endroit a une masse volumique de 0,917 g/cm³ ou plus.

11. Film stratifié selon la revendication 1, dans lequel la couche envers en polyéthylène linéaire très basse densité et la couche endroit comprennent chacune un terpolymère éthylène/1-octène/α-oléfine dans lequel l'α-oléfine est en C₃-C₆.

12. Film stratifié selon la revendication 1, dans lequel l'agent collant comprend un polymère de faible masse moléculaire en tant qu'additif.

13. Film stratifié selon la revendication 1, dans lequel l'agent collant comprend un matériau polymère de faible masse moléculaire pouvant être extrait avec du n-hexane.

14. Film stratifié selon la revendication 1, dans lequel l'agent collant comprend une polyoléfine de faible masse moléculaire en C₂-C₁₂ en tant qu'additif en une quantité qui assure une adhérence efficace.

15. Film stratifié selon la revendication 1, dans lequel l'agent collant comprend au moins l'une des polyoléfines de faible masse moléculaire en C₃-C₆ du groupe constitué par le polypropylène, le polybutène, le polypentène, le polyhexène, les isomères de ceux-ci et les mélanges de ceux-ci.

16. Film stratifié selon la revendication 1, dans lequel l'agent collant est présent dans le polyéthylène linéaire très basse densité en une quantité comprise entre 0,01 % et 3 % en poids.

17. Film stratifié selon la revendication 1, dans lequel l'agent collant est du polybutène ou du polyisobutène de faible masse moléculaire.

18. Film stratifié selon la revendication 1, dans lequel la couche endroit et la couche envers sont les couches extérieures d'un stratifié comprenant au moins 3 couches.

19. Film stratifié selon la revendication 1, dans lequel l'épaisseur du stratifié est comprise entre 0,02 et 6 mils.

20. Film stratifié ayant au moins deux couches, ledit film étant approprié pour une utilisation comme matériau d'emballage adhérent, dans lequel l'une des couches extérieures a une adhérence supérieure à celle de l'autre couche extérieure, caractérisé en ce que la couche extérieure ayant une adhérence plus élevée comprend un polyéthylène linéaire très basse densité ayant une masse volumique inférieure à 0,915 g/cm³, ayant un indice de fluidité compris entre 0,1 et 25 g/ 10 min, et la masse volumique de la couche extérieure ayant une adhérence plus élevée est inférieure d'au moins 0,004 g/cm³ à la masse volumique de l'autre couche extérieure, qui comprend un polyéthylène linéaire basse densité ayant une masse volumique d'au moins 0,916 g/cm³.

21. Utilisation du film stratifié selon l'une des revendications précédentes en tant que film adhérent.

22. Procédé de fabrication d'un film stratifié ayant des propriétés d'adhérence différentielles, dans lequel le stratifié comprenant au moins deux couches dont l'une est la couche envers qui joue le rôle de couche adhérente, et dont l'autre est la couche endroit qui joue le rôle de couche ayant une adhérence plus faible, et contenant éventuellement une ou plusieurs couches entre la couche envers et la couche endroit, ledit procédé étant caractérisé par le fait de :
choisir comme couche envers un polyéthylène linéaire très basse densité ayant une masse volumique comprise entre 0,915 et 0,86 g/cm³ et un indice de fluidité compris entre 0,1 et 25 g/10 min et qui contient une quantité d'un agent collant suffisante pour conférer un degré d'adhérence efficace,
choisir comme couche endroit un polyéthylène linéaire basse densité ayant une masse volumique d'au moins 0,916 g/cm³ et un indice de fluidité compris entre 0,1 et 25 g/10 min et contenant éventuellement un agent collant qui confère une adhérence inférieure à celle de la couche envers, ledit polyéthylène linéaire basse densité étant en outre caractérisé comme ayant une masse volumique qui est supérieure d'au moins 0,004 g/cm³ à la masse volumique du polyéthylène linéaire très basse densité choisi pour la couche envers,
choisir éventuellement un ou plusieurs matériaux pour la (ou les) couche(s) entre la couche envers et la couche endroit,
former des couches minces à partir des matériaux choisis, s'ils ne sont pas déjà sous cette forme,
et lier thermiquement les couches pour former un stratifié ayant une épaisseur comprise entre 0,0005 mm et 0,1524 mm.

23. Film stratifié selon la revendication 1, dans lequel le polyéthylène linéaire basse densité est un interpolymère d'éthylène et de butène-1, d'hexène-1, d'octène-1 et/ou de 4-méthyl-1-pentène.

24. Film stratifié selon la revendication 1, dans lequel l'agent collant est une polyoléfine de faible masse moléculaire.

25. Film stratifié selon la revendication 1 comprenant en plus au moins une couche de film en tant que couche centrale.

26. Utilisation du film stratifié selon la revendication 1 en tant que matériau d'emballage adhérent.

27. Emballage adhérent comprenant un article emballé par adhérence par le film stratifié selon la revendication 1.

28. Film stratifié à plusieurs couches qui est utilisable comme matériau d'emballage adhérent, ledit film stratifié étant caractérisé par :
une couche endroit et une couche envers ayant des propriétés d'adhérence différentielles et une différence de masse volumique d'au moins 0,004 g/cm³,
la couche endroit comprenant un polyéthylène linéaire basse densité ayant une masse volumique d'au moins 0,916 g/cm³,
la couche envers comprenant un copolymère d'éthylène linéaire très basse densité et un agent collant de type polybutène ou polyisobutène de faible masse moléculaire, le copolymère linéaire très basse densité ayant une masse volumique inférieure à 0,915 g/cm³, et
le degré d'adhérence de la couche endroit étant insuffisant pour conférer une bonne auto-adhérence lorsqu'il est utilisé dans des applications d'étirement-adhérence.
